# EUROPÄISCHE PATENTSCHRIFT

(11) **EP 3 283 252 B1**
(45) Veröffentlichungstag und Bekanntmachung des Hinweises auf die Patenterteilung: **05.06.2019**
(21) Anmeldenummer: 16719227.7
(22) Anmeldetag: 08.04.2016
(51) Int. Cl.: B23K 101/06, B23K 103/04, B23K 103/12, B23K 37/04, B23K 20/10, B23K 37/00

(54) **ULTRASCHALL-SCHWEISSZANGE**
ULTRASONIC WELDING TONGS
PORTE-BAGUETTES DE SOUDAGE À ULTRASONS

(30) Priorität: 16.04.2015 DE 102015206866
(43) Veröffentlichungstag der Anmeldung: 21.02.2018
(73) Patentinhaber: Schunk Sonosystems GmbH, 35435 Wettenberg (DE)
(72) Erfinder: GASSERT, Frank, 35649 Bischoffen (DE); QUILLMANN, Peter, 35633 Lahnau (DE); WAGENBACH, Udo, 35418 Buseck (DE)
(74) Vertreter: advotec.
(86) Internationale Anmeldenummer: PCT/EP2016/057689
(87) Internationale Veröffentlichungsnummer: WO 2016/166019

(56) Entgegenhaltungen:
- WO-A1-2014/122516
- WO-A2-2005/107994
- JP-A- 2012 030 283
- US-A- 3 813 021
- US-A1- 2010 005 981

## Beschreibung

Die vorliegende Erfindung betrifft eine Ultraschall-Schweißzange zur Ausführung einer Ultraschall-Schweißung an einem rohrförmigen elektrisch leitenden Schweißmedium mit einem ersten Zangenteil und einem relativ zum ersten Zangenteil bewegbaren zweiten Zangenteil, wobei das erste Zangenteil eine durch eine Ultraschallschwingungen übertragende Sonotrode gebildete erste Schweißbacke und das zweite Zangenteil eine durch einen Amboss gebildete zweite Schweißbacke aufweist.

Ultraschall-Schweißzangen der eingangs genannten Art werden insbesondere zur Durchführung von Endverschweißungen an metallischen Rohrleitungen verwendet, wie sie beispielsweise als Fluidleitungen an Kühlaggregaten, also insbesondere an Klimageräten oder Kühlschränken, durchgeführt werden. Derartige Endverschweißungen werden nach Befüllen eines die Fluidleitungen umfassenden Kühlkreislaufes mit einem Kältemittel durchgeführt, derart, dass eine an einem freien Ende der Rohrleitung angeordnete Befüllarmatur gleichzeitig mit Durchführung der Endverschweißung vom Rohrleitungsende abgetrennt wird.

Obwohl der eigentliche Schweißvorgang zwischen den relativ klein und schmal ausgeführten Schweißbacken erfolgt, die aufgrund ihrer schmalen und kleinen Ausgestaltung eine Positionierung in Schweißstellung auch bei engsten Raumverhältnissen möglich machen, um den Schweißvorgang auch sehr dicht an dem mit der Fluidleitung versehenen Aggregat durchführen zu können, erfordert die Anordnung der die Sonotrode umfassenden Ultraschalleinrichtung an einem Zangenteil der Ultraschall-Schweißzange eine insgesamt großvolumige Ausgestaltung der Ultraschall-Schweißzange mit einer entsprechenden Masse. Daher ist zur Handhabung der Ultraschall-Schweißzange die Kombination der Ultraschall-Schweißzange mit einer Handhabungseinrichtung erforderlich, um eine Gewichtskompensation der Ultraschall-Schweißzange zu ermöglichen, und somit die Handhabung der Ultraschall-Schweißzange zu erleichtern.

Obwohl die bekannten Ultraschall-Schweißzangen mit einer derartigen Handhabungseinrichtung versehen sind und daher leicht mit nur einer Hand positioniert werden können, ist bei den bekannten Ultraschall-Schweißzangen eine Zweihandbedienung aus Sicherheitsgründen vorgesehen. Hierdurch soll sichergestellt werden, dass sich keine Hand der Bedienungsposition bei Durchführung des Schweißvorgangs im Bereich der Schweißbacken befindet. Zur Zweihandbedienung sind zur Auslösung des Schweißvorgangs zwei Auslöseschalter vorgesehen, die jeweils an einem Handgriff angeordnet sind, sodass sich beide Hände der Bedienungsperson zur Durchführung bzw. Auslösung des Schweißvorgangs an voneinander beabstandeten Handgriffen befinden müssen.

In der Praxis setzt daher die Durchführung einer Endverschweißung einer rohrförmigen Fluidleitung eines Kühlaggregats ein besonderes Geschick der Bedienungsperson voraus, da gleichzeitig mit Durchführung des Schweißvorgangs sichergestellt werden muss, dass die mit der Endverschweißung von der Fluidleitung abgetrennte Befüllarmatur an einer gewünschten Stelle positioniert wird und insbesondere nicht beim Herunterfallen in einen Aufnahmebehälter beschädigt wird.

Der vorliegenden Erfindung liegt die Aufgabe zugrunde, die Handhabung einer Ultraschall-Schweißzange zu vereinfachen, ohne nachteilige Auswirkung auf die Betriebssicherheit der Ultraschall-Schweißzange.

Diese Aufgabe wird durch eine Ultraschall-Schweißzange mit den Merkmalen des Anspruchs 1 gelöst.

Erfindungsgemäß sind die erste oder die zweite Schweißbacke sowie eine einen zwischen den Schweißbacken gebildeten Schweißmedium-Aufnahmeraum begrenzende Schweißmedium-Anschlageinrichtung jeweils elektrisch leitend ausgebildet und voneinander elektrisch isoliert angeordnet, wobei die elektrisch leitende Schweißbacke sowie die elektrisch leitende Schweißmedium-Anschlageinrichtung Komponenten eines Sicherheitsschaltkreises ausbilden, derart, dass eine Auslösung eines Schweißvorgangs mit einem Schließvorgang der Schweißbacken nach Schließen des Sicherheitsschaltkreises durch Herstellen eines elektrischen Kontakts zwischen der elektrisch leitenden Schweißbacke und der Schweißmedium-Anschlageinrichtung mittels des Schweißmediums erfolgt.

Die erfindungsgemäß ausgestaltete Ultraschall-Schweißzange ermöglicht demnach die Auslösung eines Schweißvorgangs nur dann, wenn eine elektrische Kontaktierung der Schweißmedium-Anschlageinrichtung mit der elektrisch leitenden Schweißbacke mittels des als Überbrückungskontakt zwischen der Klemmbacke und der Schweißmedium-Anschlageinrichtung angeordneten Schweißmediums erfolgt. Damit ist das Schweißmedium selbst Bestandteil einer Auslöseeinrichtung zur Auslösung des Schweißvorgangs.

Aufgrund der erfindungsgemäßen Ausgestaltung der Ultraschall-Schweißzange ist keine Zweihandbedienung der Ultraschall-Schweißzange mehr notwendig, um sicherzustellen, dass ein Schließvorgang der Schweißbacken mit nachfolgendem Schweißvorgang nur tatsächlich dann erfolgt, wenn sichergestellt ist, dass aufgrund gleichzeitiger Kontaktierung des Schweißmediums mit der elektrisch leitenden Schweißbacke und der Schweißmedium-Anschlageinrichtung sich das Schweißmedium in Schweißposition befindet. Damit ist es möglich, die Ultraschall-Schweißzange für eine betriebssichere Einhandbedienung vorzusehen, derart, dass insbesondere lediglich ein Handgriff an der Ultraschall-Schweißzange notwendig ist, um diese zu handhaben.

Da aufgrund der regelmäßig mit der Ultraschall-Schweißzange kombinierten Handhabungseinrichtung ohnehin für eine Gewichtsentlastung gesorgt ist, muss durch die Bedienungsposition lediglich noch eine Schwenkpositionierung der Ultraschall-Schweißzange gegenüber dem Schweißmedium erfolgen, derart, dass sich das Schweißmedium im Schweißmedium-Aufnahmeraum zwischen den Schweißbacken befindet. Diese Schwenkpositionierung der Ultraschall-Schweißzange kann ohne Weiteres einhändig erfolgen, sodass es der Bedienungsperson möglich ist, während des Schweißvorgangs mit der freien Hand die Befüllarmatur zu erfassen, um deren korrekte Positionierung nach Abtrennung von dem Schweißmedium sicherzustellen.

Bei einer bevorzugten Ausführungsform der Ultraschall-Schweißzange ist die Schweißmedium-Anschlageinrichtung über eine als Isolationskörper ausgebildete Anschlusseinrichtung mit einem Zangenteil verbunden, sodass allein aufgrund des Anschlusskörpers, also beispielsweise einer Verbindungseinrichtung, die ohnehin notwendig ist, um die Anschlusseinrichtung mit dem jeweiligen Zangenteil zu verbinden, die gewünschte elektrische Isolierung realisiert ist.

Besonders vorteilhaft ist es, wenn die Schweißmedium-Anschlageinrichtung am ersten Zangenteil und die elektrisch leitende Schweißbacke am zweiten Zangenteil angeordnet sind, sodass die Relativbeweglichkeit des zweiten Zangenteils gegenüber dem ersten Zangenteil nicht beeinträchtigt wird.

Wenn die Schweißmedium-Anschlageinrichtung zwei elektrisch voneinander isolierte Anschlagelemente aufweist, die in einer gemeinsamen Anschlagebene parallel zu einer zur Durchführung des Schweißvorgangs definierten Längsachsenrichtung des Schweißmediums angeordnet sind, kann die Anschlageinrichtung in besonders vorteilhafter Weise nicht nur im Zusammenhang mit einer sicheren Auslösung des Schweißvorgangs, sondern darüber hinaus auch zur Gewährleistung einer definierten Positionierung des Schweißmediums genutzt werden, da in diesem Fall die Auslösung des Schweißvorgangs noch zusätzlich noch davon abhängig gemacht werden kann, dass über das Schweißmedium eine elektrisch leitende Verbindung zwischen den voneinander isolierten Anschlagelementen hergestellt wird.

Eine besonders vorteilhafte Anordnung der Anschlagelemente ergibt sich, wenn die Anschlagelemente derart am ersten Zangenteil angeordnet sind, dass freie Kontaktenden der Anschlagelemente die durch den Amboss am unteren Zangenteil ausgebildete Schweißbacke zwischen sich aufnehmen.

Nachfolgend wird eine vorteilhafte Ausführungsform der Ultraschall-Schweißzange anhand der Zeichnungen näher erläutert.

Es zeigen:
- **Fig. 1**: eine isometrische Darstellung einer Ultraschall-Schweißzange mit in einem Zangenkopf angeordneten, in Schließstellung befindlichen Schweißbacken;
- **Fig. 2**: eine Darstellung eines Zangenkopfs mit in Öffnungsstellung angeordneten Schweißbacken.

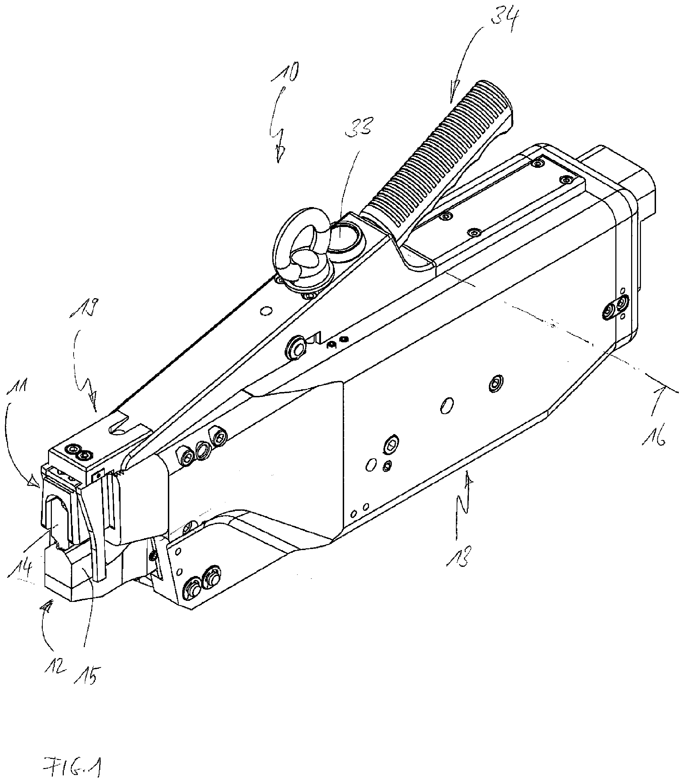

**Fig. 1** zeigt in isometrischer Darstellung eine Ultraschall-Schweißzange 10 mit einem oberen Zangenteil 11 und einem unteren Zangenteil 12, die in einem gemeinsamen Zangengehäuse 13 angeordnet sind. Das obere Zangenteil 11 weist als wesentlichen Bestandteil eine Ultraschallschwingungseinrichtung mit einer am vorderen Ende der Ultraschallschwingungseinrichtung angeordneten Sonotrode 14 auf, die eine erste Schweißbacke ausbildet. An dem Zangengehäuse 13 ist gegenüber der Sonotrode 14 bewegbar gelagert ein Amboss 15 angeordnet. Im Fall des dargestellten Ausführungsbeispiels ist der Amboss 15, der eine zweite Schweißbacke ausbildet, mittels einer nicht näher dargestellten Betätigungseinrichtung um eine im hinteren Teil des Zangengehäuses 13 ausgebildete Schwenkachse 16 gegen die Sonotrode 14 verschwenkbar, derart, dass eine auf dem Amboss 15 ausgebildete Gegenfläche 17 gegen eine Arbeitsfläche 18 der im vorliegenden Fall Längsschwingungen ausführenden Sonotrode 14 bewegt wird. Abweichend hiervon kann eine Zustellbewegung des Ambosses 15 in Richtung auf die Sonotrode 14 beispielsweise auch mittels einer linearen Zustelleinrichtung erfolgen.

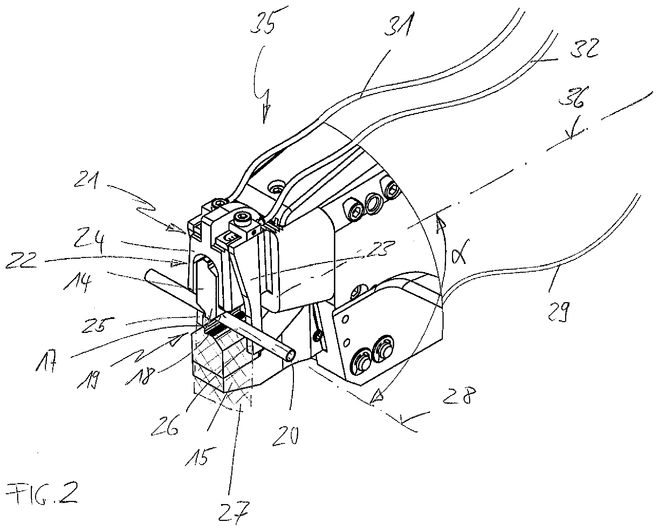

Die Sonotrode 14 und der Amboss 15 bilden im Wesentlichen einen Schweißkopf 35 der Ultraschall-Schweißzange 10 aus, und begrenzen, wie in **Fig. 2** dargestellt, in einer Öffnungsstellung des Schweißkopfes 35 einen Schweißmedium-Aufnahmeraum 19, in den ein im vorliegenden Fall als Metallröhrchen ausgeführtes Schweißmedium 20 einführbar ist. Wie aus **Fig. 2** weiter ersichtlich, ist das obere Zangenteil 11 mit einer Schweißmedium-Anschlageinrichtung 21 versehen, die zwei voneinander beabstandete Anschlagelemente 22, 23 aufweist, welche über einen Isolationskörper 24 mit dem oberen Zangenteil 11 verbunden sind. Die Anschlagelemente 22, 23 erstrecken sich mit freien Kontaktenden 25, 26 zu beiden Seiten des Ambosses 15 in einer gemeinsamen Anschlagebene 27, derart, dass sich bei einer Anlage des durch den Schweißmedium-Aufnahmeraum 19 hindurch geführten Schweißmediums 20 gegen die Kontaktenden 25, 26 eine in **Fig. 2** dargestellte Längsachsenausrichtung 28 des Schweißmediums 20 ergibt, die sicherstellt, dass sich eine nach Durchführung eines Schließvorgangs der Schweißbacken ausgeführte Schweißnaht in Richtung einer Längsachse 36 der Ultraschall-Schweißzange 10, also etwa im Wesentlichen unter einem Winkel α = 90° zur Längsachsenausrichtung 28 des Schweißmediums erstreckt.

Bei der in **Fig. 2** dargestellten Ausführungsform ist der elektrisch leitende Amboss 15 mit dem ebenfalls elektrisch leitend ausgebildeten Gehäuse 13 verbunden, das ein elektrisches Massepotential ausbildet und über einen Erdungsleiter 29 geerdet ist.

Die Anschlagelemente 22, 23, die ebenfalls elektrisch leitend ausgebildet sind, sind durch Anordnung an dem Isolationskörper 24 gegenüber dem Gehäuse 13 und gegeneinander elektrisch isoliert und mit jeweils einem Signalleiter 31, 32 an eine nicht näher dargestellte Auswerteeinheit angeschlossen, die zusammen mit dem Amboss 15 und den Anschlagelementen 22, 23 in einem Sicherheitsschaltkreis angeordnet sind, in den ebenfalls ein in **Fig. 1** an einem Handgriff 34 der Ultraschall-Schweißzange 10 angeordneter Betätigungsschalter 33 integriert ist.

Der in **Fig. 2** dargestellte Aufbau des Schweißkopfes 35 mit den gegeneinander isolierten Anschlagelementen 22, 23 und dem Amboss 15 gewährleistet, dass ein Schließen des Sicherheitsschaltkreises voraussetzt, dass sowohl der Betätigungsschalter 33 am Handgriff 34 betätigt wird als auch ein elektrischer Kontakt zwischen dem Amboss 15 und beiden Anschlagelementen 22, 23 über das Schweißmedium 20 hergestellt ist. Erst wenn diese beiden Voraussetzungen erfüllt sind, ist der Sicherheitsschaltkreis geschlossen und es erfolgt ein Schließvorgang der Schweißbacken durch ein Verschwenken des Ambosses 15 gegen die Sonotrode 14 als Voraussetzung zur Durchführung des Schweißvorgangs.

## Patentansprüche

1. Ultraschall-Schweißzange (10) zur Ausführung einer Ultraschall-Schweißung an einem rohrförmigen elektrisch leitenden Schweißmedium (20) mit einem ersten Zangenteil (11) und einem relativ zum ersten Zangenteil bewegbaren zweiten Zangenteil (12), wobei das erste Zangenteil eine durch eine Ultraschallschwingungen übertragende Sonotrode (14) gebildete erste Schweißbacke und das zweite Zangenteil eine durch einen Amboss (15) gebildete zweite Schweißbacke aufweist,
**dadurch gekennzeichnet,**
**dass** die erste oder die zweite Schweißbacke sowie eine einen zwischen den Schweißbacken gebildeten Schweißmedium-Aufnahmeraum (19) begrenzende Schweißmedium-Anschlageinrichtung (21) jeweils elektrisch leitend ausgebildet und voneinander elektrisch isoliert angeordnet sind, wobei die elektrisch leitende Schweißbacke sowie die elektrisch leitende Schweißmedium-Anschlageinrichtung Komponenten eines Sicherheitsschaltkreises ausbilden, derart, dass eine Auslösung eines Schweißvorgangs mit einem Schließvorgang der Schweißbacken nach Schließen des Sicherheitsschaltkreises durch Herstellen eines elektrischen Kontakts zwischen der elektrisch leitenden Schweißbacke und der Schweißmedium-Anschlageinrichtung mittels des Schweißmediums erfolgt.

2. Ultraschall-Schweißzange nach Anspruch 1,
**dadurch gekennzeichnet,**
**dass** die Schweißmedium-Anschlageinrichtung (21) über eine als Isolationskörper (24) ausgebildete Anschlusseinrichtung mit einem Zangenteil verbunden ist.

3. Ultraschall-Schweißzange nach Anspruch 1 oder 2,
**dadurch gekennzeichnet,**
**dass** die Schweißmedium-Anschlageinrichtung (21) am ersten Zangenteil (11) und die elektrisch leitende Schweißbacke am zweiten Zangenteil (12) angeordnet sind.

4. Ultraschall-Schweißzange nach einem der vorangehenden Ansprüche,
**dadurch gekennzeichnet,**
**dass** die Schweißmedium-Anschlageinrichtung (21) zwei elektrisch voneinander isolierte Anschlagelemente (22, 23) aufweist, die in einer gemeinsamen Anschlagebene (27) parallel zu einer zur Durchführung des Schweißvorgangs definierten Längsachsenausrichtung (36) des Schweißmediums (20) angeordnet sind.

5. Ultraschall-Schweißzange nach Anspruch 4,
**dadurch gekennzeichnet,**
**dass** die Anschlagelemente (22, 23) derart am ersten Zangenteil (11) angeordnet sind, dass freie Kontaktenden (25, 26) der Anschlagelemente die durch den Amboss (15) am unteren Zangenteil (12) ausgebildete Schweißbacke zwischen sich aufnehmen.

## Claims

1. Ultrasonic welding tongs (10) for performing ultrasonic welding on a tubular electrically conductive welding medium (20), comprising a first tongs part (11) and a second tongs part (12) movable relative to the first tongs part, the first tongs part having a first welding jaw, which is formed by a sonotrode (14), which transmits ultrasonic vibrations, and the second tongs part having a second welding jaw, which is formed by an anvil (15),
**characterized in that**
the first welding jaw or the second welding jaw and a welding-medium stop device (21), which delimits a welding-medium holding space (19) formed between the welding jaws, are each electrically conductive and arranged electrically isolated from each other, the electrically conductive welding jaw and the electrically conductive welding-medium stop device forming components of a safety circuit in such a manner that a welding process including a closing of the welding jaws is triggered after the safety circuit has been closed by the formation of an electrical contact between the electrically conductive welding jaw and the welding-medium stop device by way of the welding medium.

2. The ultrasonic welding tongs according to claim 1,
**characterized in that**
the welding-medium stop device (21) is connected to a tongs part via a connecting element realized as an isolating body (24).

3. The ultrasonic welding tongs according to claim 1 or 2,
**characterized in that**
the welding-medium stop device (21) is arranged on the first tongs part (11) and the electrically conductive welding jaw is arranged on the second tongs part (12).

4. The ultrasonic welding tongs according to any one of the preceding claims,
**characterized in that**
the welding-medium stop device (21) has two stop elements (22, 23), which are electrically isolated from each other and which are arranged in a shared stop plane (27) parallel to a longitudinal axis orientation (36) of the welding medium (20), said longitudinal axis orientation being defined for the performance of the welding process.

5. The ultrasonic welding tongs according to claim 4,
**characterized in that**
the stop elements (22, 23) are arranged on the first tongs part (11) in such a manner that free contact ends (25, 26) of the stop elements accommodate between them the welding jaw formed by the anvil (15) at the lower tongs part (12).

## Revendications

1. Pince de soudage par ultrasons (10) pour l'exécution d'un soudage par ultrasons sur un moyen de soudage (20) tubulaire et électriquement conducteur, la pince de soudage par ultrasons comprenant une première partie de pince (11) et une seconde partie de pince (12) étant mobile par rapport à la première partie de pince, la première partie de pince ayant une première mâchoire de soudage qui est formée par une sonotrode (14) qui transmet des vibrations ultrasons, et la seconde partie de pince ayant une seconde mâchoire de soudage qui est formée par une enclume (15),
**caractérisée en ce que**
la première ou la seconde mâchoire de soudage et un dispositif d'arrêt (21) du moyen de soudage, qui délimite un espace de réception (19) du moyen de soudage formé entre les mâchoires de soudage, sont électriquement conducteurs et disposés de façon électriquement isolée les uns des autres, la mâchoire de soudage électriquement conductrice et le dispositif d'arrêt du moyen de soudage électriquement conducteur formant des composants d'un circuit de sécurité de telle sorte qu'un processus de soudage comprenant la fermeture des mâchoires de soudage est déclenché après que le circuit de sécurité a été fermé par l'établissement d'un contact électrique entre la mâchoire de soudage électriquement conductrice et le dispositif d'arrêt du moyen de soudage par l'intermédiaire du moyen de soudage.

2. Pince de soudage par ultrasons selon la revendication 1,
**caractérisée en ce que**
le dispositif d'arrêt (21) du moyen de soudage est connecté à une partie de pince par l'intermédiaire d'un dispositif de raccordement réalisé comme corps isolant (24).

3. Pince de soudage par ultrasons selon la revendication 1 ou 2,
**caractérisée en ce que**
le dispositif d'arrêt (21) du moyen de soudage est disposé sur la première partie de pince (11) et la mâchoire de soudage électriquement conductrice est disposée sur la seconde partie de pince (12).

4. Pince de soudage par ultrasons selon l'une quelconque des revendications précédentes,
**caractérisée en ce que**
le dispositif d'arrêt (21) du moyen de soudage a deux éléments d'arrêt (22, 23) qui sont électriquement isolés l'un de l'autre et qui sont disposés parallèlement à une orientation d'axe longitudinal (36) du moyen de soudage (20) dans un plan d'arrêt (27) commun, ladite orientation d'axe longitudinal étant définie pour l'exécution du processus de soudage.

5. Pince de soudage par ultrasons selon la revendication 4,
**caractérisée en ce que**
les éléments d'arrêt (22, 23) sont disposés sur la première partie de pince (11) de telle sorte que des extrémités de contact (25, 26) libres des éléments d'arrêt reçoivent la mâchoire de soudage formée par l'enclume (15) sur la partie de pince (12) inférieure.
